**Europäisches Patentamt**

**European Patent Office**

**Office européen des brevets**

(11) Veröffentlichungsnummer: **0 035 201**
**B1**

# EUROPÄISCHE PATENTSCHRIFT

(45) Veröffentlichungstag der Patentschrift:
19.01.83

(51) Int. Cl.³: **C 01 B 25/10**

(21) Anmeldenummer: **81101283.0**

(22) Anmeldetag **23.02.81**

(54) Verfahren zur Herstellung von Phosphorpentachlorid.

(30) Priorität: **04.03.80 DE 3008194**

(43) Veröffentlichungstag der Anmeldung:
**09.09.81 Patentblatt 81/36**

(45) Bekanntmachung des Hinweises auf die Patenterteilung:
**19.01.83 Patentblatt 83/3**

(84) Benannte Vertragsstaaten:
**CH DE FR GB IT LI**

(56) Entgegenhaltungen:
**EP-A-0 022 554**
**DE-B-2 461 905**
**US-A-1 906 440**
**US-A-1 914 750**
**ULLMANNS ENCYCLOPÄDIE DER TECHNI-SCHEN CHEMIE, 3. Auflage, Band 13, 1962, URBAN & SCHWARZENBERG, München-Berlin, Seite 563**

(73) Patentinhaber: **HOECHST AKTIENGESELLSCHAFT,**
**Postfach 80 03 20, D-6230 Frankfurt/Main 80 (DE)**

(72) Erfinder: **Rieck, Hans-Peter, Dr.,**
**Freiherr-vom-Stein-Strasse 37, D-6233 Kelkheim (Taunus) (DE)**
Erfinder: **Russow, Jürgen, Dr., Am Schieferberg 45, D-6233 Kelkheim (Taunus) (DE)**

## Verfahren zur Herstellung von Phosphorpentachlorid

Die Erfindung betrifft ein Verfahren zur Herstellung von Phosphorpentachlorid hoher Reinheit in Form eines rieselfähigen Kristallpulvers durch Reaktion von Phosphortrichlorid mit Chlor.

Phosphorpentachlorid kann nach bekannten Verfahren diskontinuierlich oder kontinuierlich, mit oder ohne Lösungsmittel aus Phosphortrichlorid und Chlor hergestellt werden.

Bei einem in Kirk-Othmer (2. Auflage, Band 15, S. 307) angegebenen kontinuierlichen Verfahren werden lange, mit Blei ausgekleidete Reaktionstürme benutzt, in denen das zudosierte Phosphortrichlorid von oben herabregnet und durch den Kontakt mit aufwärts strömendem Chlor in Phosphorpentachlorid umgewandelt wird. Dieses sammelt sich am Boden des Gefäßes als feste Masse an und kann durch Schnecken ausgetragen werden.

Die Umsetzung von flüssigem Chlor mit Phosphortrichlorid unter Druck wird in der US-Patentschrift 1 914 750 beschrieben. Nach einem anderen Verfahren wird Phosphorpentachlorid gebildet, wenn Phosphortrichlorid feinverteilt in eine Chloratmosphäre eingetragen wird. Dabei ist nachteilig, daß die Reaktionswärme nur sehr schlecht abgeführt werden kann und das Pentachlorid teilweise staubförmig anfällt. Gewünscht wird vielmehr ein kristallines und rieselfähiges Produkt.

Als Lösungsmittel für die Umsetzung von Phosphortrichlorid und Chlor wird gewöhnlich Tetrachlormethan eingesetzt (Kirk-Othmer). Es läßt sich jedoch auch Phosphoroxychlorid (US-Patentschrift 1 906 440) verwenden. Bei diesen Verfahren ist es schwierig, den letzten Rest des Lösungsmittels zu entfernen, da es leicht zur Sublimation von $PCl_5$ kommt.

Nach einem in Ullmann (Enzyklopädie der technischen Chemie, 3. Auflage, Band 13, S. 563) angegebenen Verfahren wird Phosphorpentachlorid diskontinuierlich hergestellt, indem Chlor in vorgelegtes Phosphortrichlorid eingeleitet wird. Dabei wird die Reaktionswärme durch Außenkühlung und durch abdampfendes Trichlorid abgeführt. Aus der flüssigen Phase fällt festes Pentachlorid aus, so daß am Ende der Reaktion festes Pentachlorid mit geringen Anteilen an Trichlorid vorliegt.

Ferner ist ein dreistufiges Verfahren zur Herstellung von Phosphorpentachlorid bekanntgeworden (DE-B-2 461 905). Dabei wird zunächst Phosphortrichlorid mit einem Unterschuß von Chlor umgesetzt. Nach dem Abkühlen fällt ein aus Phosphorpentachlorid-Kristallen und Phosphortrichlorid bestehender Kristallbrei an (Stufe 1). Die Kristalle werden von der flüssigen Phosphortrichlorid-Phase in einem zusätzlichen Schritt abgetrennt (Stufe 2) und schließlich von den letzten Spuren Phosphortrichlorid befreit (Stufe 3). Es ist ein Nachteil dieses Verfahrens, daß in einem aufwendigen Reaktionsschritt das gebildete Pentachlorid von der Trichlorid-Phase getrennt werden muß.

Es bestand daher die Aufgabe ein Verfahren zu finden, das die Nachteile der bekannten Verfahren nicht aufweist sowie einfach und kontinuierlich betrieben werden kann.

Es wurde nun ein zweistufiges Verfahren gefunden, das diese Bedingungen erfüllt. Dieses Verfahren liefert Phosphorpentachlorid hoher Reinheit in Form eines rieselfähigen Kristallpulvers durch Umsetzung von Phosphortrichlorid mit Chlor. Es ist dadurch gekennzeichnet, daß man die Umsetzung in zwei Stufen vornimmt, wobei man in der ersten Stufe unter Rühren bei einer Temperatur von $0-150°$ C Phosphortrichlorid mit der 0,1- bis 0,999fachen molaren Menge Chlor vereinigt, man $0-90\%$ des zugegebenen Phosphortrichlorids abdestilliert und dabei zu einem aus $50-99.9$ Mol-% Phosphorpentachlorid (Rest: $PCl_3$) bestehenden Kristallbrei umsetzt und diesen in der zweiten Stufe bei $0-150°$ C mit einem Überschuß an Chlor zu Phosphorpentachlorid reagieren läßt.

Das Abdestillieren des $PCl_3$ kann nach, insbesondere aber während der Reaktion mit Chlor erfolgen. Auf diese Weise kann die beim Auskristallisieren von $PCl_5$ und bei der Chlorierung frei werdende Wärmemenge einfach abgeführt werden. Dabei richtet sich die Menge an abzudestillierendem $PCl_3$ nach der eingesetzten Chlormenge. Wichtig ist, daß in der 1. Stufe ein Kristallbrei aus $PCl_3$ und $PCl_5$ erhalten wird, der $50-99,9$ Mol-% $PCl_5$ enthält.

Bei Zugabe der 0,5- bis 0,999fachen Menge Chlor (bezogen auf vorhandenes $PCl_3$) muß kein $PCl_3$ mehr durch Destillation entfernt werden, sondern ein Sieden unter Rückfluß reicht aus. Das Abdestillieren von $PCl_3$ kann auch vorteilhaft sein, um vorhandene Spuren von $POCl_3$ zu entfernen.

Die zweite Stufe erfolgt vorzugsweise außerhalb des Gefäßes, in dem die Bildung des Kristallbreis stattfindet, oder innerhalb des Gefäßes in der Nähe der Stelle, wo das Produkt ausgetragen werden soll oder (bei diskontinuierlicher Reaktionsführung) innerhalb des Gefäßes zur Beendigung der Gesamtreaktion.

Bevorzugt sind Reaktionstemperaturen in der ersten Stufe von 75 bis 140° C und in der zweiten Stufe von 70 bis 150° C. Die Umsetzungen der beiden Reaktionsstufen können bei einem Druck von $0,1-10$, vorzugsweise $0,7-1,2$ bar durchgeführt werden. Chlor kann flüssig oder als Gas eingesetzt werden.

Vorzugsweise wird zur Vermeidung einer Gasphasenreaktion das Chlor in den Kristallbrei eingeleitet, während das Phosphortrichlorid von oben auf die Mischung von $PCl_3/PCl_5$ aufgegeben wird, beispielsweise aufgesprüht wird. Dadurch wird gewährleistet, daß die Chlorierung überwiegend im Innern der Reaktionsmischung stattfindet, kein Chlor in die Gasphase der ersten Stufe austritt und eine gute Kristallbildung von Phosphorpentachlorid erfolgt. Aber auch ein Einleiten von Phosphortrichlorid in den Kristallbrei ist möglich.

Die erste und die zweite Stufe können im selben Reaktionsbehälter oder in zwei verschiedenen Behältern (kontinuierlich oder diskontinuierlich) durchgeführt werden.

Die Reaktion kann bereits bei 0° C ablaufen. Vorzugsweise beträgt die Reaktionstemperatur jedoch 75 bis 140° C. Bei höheren Temperaturen als 140° C besteht die Gefahr, daß das Gemisch von Phosphorpentachlorid und Phosphortrichlorid zu schmelzen beginnt und bei tieferer Temperatur wieder, unter Bildung von groben Klumpen, erstarrt. Besonders bevorzugt wird eine Reaktionstemperatur von 80 bis 120° C. Allgemein gilt, daß die Reaktionstemperatur bei hohem Phosphorpentachlorid-Anteil höher sein darf als bei geringerem. Die Reaktionswärme läßt sich durch Außenkühlung abführen. Darüberhinaus leistet die Siedekühlung des Phosphortrichlorids einen zusätzlichen Beitrag zur Kühlung. Es kann dabei sehr vorteilhaft sein, wenn ein Teil des zugeführten Phosphortrichlorids abdestilliert wird. Die so abgeführte Menge an PCl$_3$ kann bis zu 75% — zwischenzeitlich bis zu 90% — der zugegebenen Menge betragen.

In der zweiten Reaktionsstufe wird, ohne weitere Zugabe von Phosphortrichlorid, das an Phosphorpentachlorid reiche Reaktionsgemisch mit einem Überschuß an Chlor umgesetzt. Diese zweite Stufe kann unter Rühren mit gleichzeitiger Außenkühlung erfolgen, was besonders bei relativ hohem Phosphortrichlorid-Gehalt vorteilhaft ist. Besteht das Reaktionsgemisch jedoch nahezu vollständig aus Phosphorpentachlorid (95 bis 99,9 Mol-%) so kann die zweite Stufe auch so durchgeführt werden, daß die Kristalle aus der ersten Stufe in einen mit einer Chloratmosphäre gefüllten Behälter rieseln.

Der Transport des (breiförmigen oder sandförmigen) Reaktionsgemisches der ersten Stufe zur zweiten Stufe kann kontinuierlich durch ein Austragungsorgan, insbesondere eine Schnekke, erfolgen. Andere Fördermittel, beispielsweise Schwerkraft, sind ebenfalls einsetzbar. Man kann auch die Chlorierung der zweiten Stufe bereits im Austragungsorgan der ersten Stufe durchführen. Dies ist besonders vorteilhaft, wenn im Reaktionsgemisch nur noch sehr wenig Phosphortrichlorid vorhanden ist. Nach der Chlorierung in der zweiten Reaktionsstufe kann das Phosphorpentachlorid diskontinuierlich oder kontinuierlich abgeführt werden. Überschüssiges Chlor kann durch Evakuieren oder durch Ausblasen mit getrocknetem Stickstoff entfernt und der ersten Reaktionsstufe wieder zugeführt werden.

Bei der Zugabe von Chlor und Phosphortrichlorid zu dem in der ersten Stufe vorgelegten Gemisch aus Phosphortrichlorid und Phosphorpentachlorid wird im allgemeinen ein Molverhältnis PCl$_3$ : Cl$_2$ von 1 : 0,1 bis 1 : 2 und bevorzugt von 1 : 0,2 bis 1 : 0,999 einzuhalten sein. Es ist vorteilhaft, wenn für jeden Zeitabschnitt von 60 Minuten dieses Verhältnis in den angegebenen Grenzen liegt, d. h. nicht längere Zeit ausschließlich ein Reaktionspartner zugegeben wird. Die Menge an zuzugebendem PCl$_3$ richtet sich vor allem nach der Menge, die während der Reaktion durch Destillation der Umsetzung entzogen wird. Durch Bestimmung der Mengen an zugeführtem PCl$_3$ und Chlor und abdestilliertem PCl$_3$ kann in einfacher Weise dafür gesorgt werden, daß der PCl$_5$-Gehalt im PCl$_5$/PCl$_3$-Kristallbrei 50 Mol-%, bevorzugt jedoch 75—99% beträgt.

Besonders bevorzugt ist es, wenn Phosphortrichlorid und Chlor gleichzeitig und kontinuierlich zugegeben werden.

In einer besonderen Ausgestaltung der Erfindung werden die erste und die zweite Reaktionsstufe im gleichen Reaktionsgefäß realisiert. Es handelt sich dabei um ein kontinuierliches Verfahren zur Herstellung von Phosphorpentachlorid hoher Reinheit in Form eines rieselfähigen Kristallpulvers durch Umsetzung von Phosphortrichlorid mit Chlor, das dadurch gekennzeichnet ist, daß man in einem gerührten Reaktionsbehälter ein Gemisch aus Phosphorpentachlorid und Phosphortrichlorid vorlegt, in das man Phosphortrichlorid einleitet oder auf dessen Oberfläche man kontinuierlich Phosphortrichlorid aufgibt, von dem die 0—0,9fache Menge abdestilliert wird, man eine, bezogen auf den nicht abdestillierten, kontinuierlich zugegebenen Anteil an PCl$_3$, 0,98 molare bis äquimolare Menge Chlor in das Gemisch einleitet, wobei das Gemisch im Temperaturbereich von 0 bis 150° C gehalten wird, man das Reaktionsprodukt in der Nähe der Stelle der Chloreinleitung abzieht und man die im abgezogenen Reaktionsprodukt erhaltene Menge Chlor zusätzlich in das Gemisch einleitet.

Dabei wird am besten das ausgetragene Chlor direkt in den Reaktionsbehälter zurückgeführt. Man kann auch das ausgetragene Chlor analysieren, auf Hypochlorit verarbeiten und eine entsprechende Menge frisches Chlor in den Reaktionsbehälter einführen.

Es ist vorteilhaft, wenn bei dieser Variante das vorgelegte Gemisch ein Molverhältnis PCl$_5$ : PCl$_3$ von 1 : 1 bis 999 : 1 vorzugsweise von 2,3 : 1 bis 999 : 1 aufweist.

Das Phosphortrichlorid wird bevorzugt auf die Oberfläche des Reaktionsgemisches (durch Zulaufen, vorzugsweise aber Aufsprühen oder Zutropfen) aufgegeben. Die Einleitungsstelle für das Chlor sollte tief in den Kristallbrei hineinragen und möglichst in der Nähe der Stelle sein, wo das Produkt ausgetragen wird.

Der Reaktionsansatz wird am besten langsam gerührt um das Phosphortrichlorid einzuarbeiten. Eine vertikale Durchmischung soll dabei möglichst vermieden werden. Bei dieser Verfahrensweise stellt sich im Reaktionsgefäß ein von der Oberfläche des Kristallbreis bis zur Einleitungsstelle des Chlor abnehmendes Konzentrationsgefälle an Phosphortrichlorid ein. Während an der Oberfläche noch Flüssigkeit festgestellt werden kann und Phosphortrichlorid an den kalten Wänden des Reaktors kondensiert, ist der Kristallbrei an der Einleitungsstelle des Chlors vollkommen durchreagiert, somit trocken, und kann kontinuierlich, z. B. mit einer Schnecke, ausgetragen werden.

Der Konzentrationsgradient für Phosphortrichlorid läßt sich am besten aufrechterhalten, wenn der Reaktionsbehälter langgestreckt ist und Chlor und Phosphortrichlorid an den entgegengesetzten Enden des Reaktionsbehälters eingeführt werden. Am besten wird ein rohrförmiger Reaktionsbehälter verwendet, der senkrecht angeordnet ist und bei dem Chlor am unteren Ende eingeleitet wird.

Auch eine diskontinuierliche Reaktionsführung ist möglich. Die Menge an Phosphorpentachlorid nimmt bei dieser Reaktionsform ständig zu. Kurz vor Beendigung der Reaktion wird ein geringer Chlorüberschuß in das Reaktionsgefäß eingeleitet, um die letzten Reste an Phosphortrichlorid in Phosphorpentachlorid zu überführen, anschließend kann das Produkt ausgetragen werden.

### Beispiel 1

Ein 1 l-Doppelmantelgefäß mit Ankerrührer, Rückflußkühler, Tropftrichter, Gaseinleitung, Thermoelement und Bodenauslaß mit angesetzter Schnecke wird unter Stickstoff-Überlagerung mit 440 g (2,11 Mol) Phosphorpentachlorid, und 29,0 g (0,211 Mol) Phosphortrichlorid gefüllt. Das Thermoelement und das Gaseinleitungsrohr tauchen tief in den Kristallbrei hinein. Doppelmantelgefäß und Rückflußkühler werden mit Wasser (19°C) gekühlt. Der Ausgang der Schnecke ist mit einem zweiten Gefäß verbunden, das mit einem Ankerrührer, Gaseinleitungsrohr und Stickstoffüberleitung versehen ist. Dieses zweite Reaktionsgefäß wird durch die umgebende Luft gekühlt.

In das Doppelmantelgefäß werden unter Rühren innerhalb 35 Min. 207 g (1,5 Mol) Phosphortrichlorid zugetropft. Gleichzeitig werden 96,4 g (1,36 Mol) Chlor in den Kristallbrei eingeleitet. Die Reaktionstemperatur steigt innerhalb weniger Minuten auf 130°C und wird anschließend durch Kühlung bei dieser Temperatur gehalten. Der Kristallbrei ist an der Oberfläche feucht, man beobachtet Kondensation des Phosphortrichlorids an der kalten Reaktorwand; beim Einleitungsrohr für Chlor ist das Produkt nahezu trocken. Das Produkt wird mit der Schnecke kontinuierlich in das zweite Reaktionsgefäß ausgetragen. In diesem Gefäß wird eine Chloratmosphäre aufrecht erhalten. Das im Kristallbrei vorhandene restliche Phosphortrichlorid reagiert mit dem Chlor sofort nach Austritt aus der Schnecke und rieselt in das zweite Reaktionsgefäß wo es unter Rühren durch die das Gefäß umgebende Luft abgekühlt wird. Man erhält 794 g (3,81 Mol) rieselfähiges, kristallines weißes bis hellgelbes Phosphorpentachlorid. Ein Verbacken des Produktes wird nicht beobachtet.

### Beispiel 2

Die Versuchsapparatur entspricht etwa der von Beispiel 1, jedoch enthält das zweite Reaktionsgefäß (Vorlage) kein Gaseinleitungsrohr und keinen Rührer.

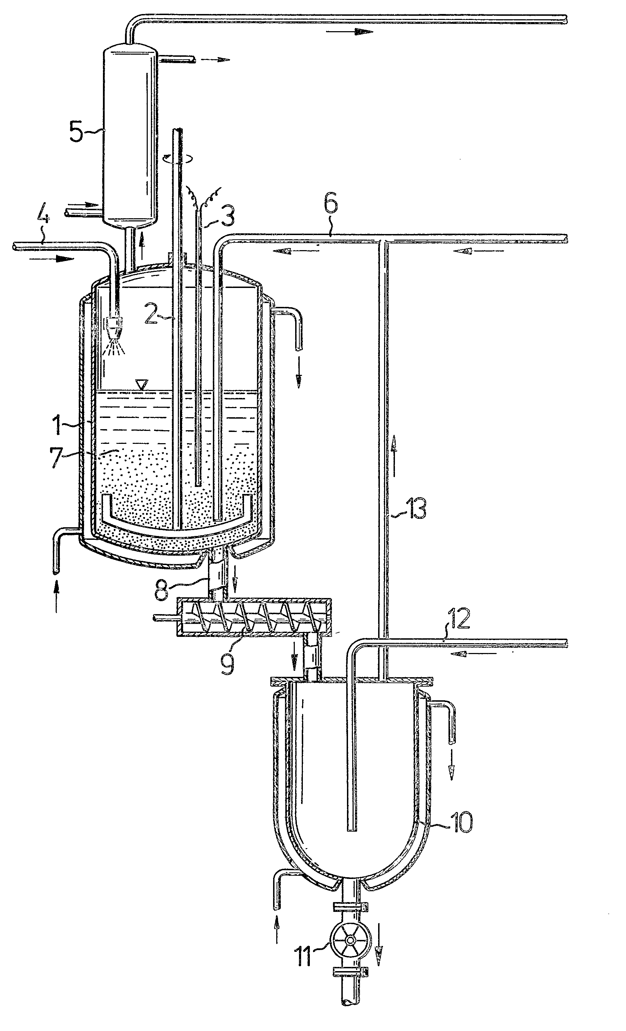

Die Apparatur ist in der Figur dargestellt. Das Doppelmantelgefäß (1) enthält den Ankerrührer (2), das Thermoelement (3), die Zuführleitung für $PCl_3$ (4) und den Rückflußkühler (5).

Das Doppelmantelgefäß (1) wird mit 444 g (2,13 Mol) Phosphorpentachlorid und 14,6 g (0,106 Mol) Phosphortrichlorid gefüllt. Innerhalb von 19 Minuten werden 221,5 g (1,613 Mol) Phosphortrichlorid über Leitung (4) zugetropft und gleichzeitig 114,4 g (1,613 Mol) Chlor durch Leitung (6) in das Gemisch (7) aus $PCl_5/PCl_3$ eingeleitet. Die Reaktionstemperatur steigt dabei rasch von Raumtemperatur auf 105°C und bleibt bis zur Beendigung der Reaktion zwischen 105° und 112°C. Während der Reaktion wird gleichzeitig vom Boden des Doppelmantelgefäßes über Leitung (8) mittels Schnecke (9) Produkt ausgetragen, so daß der Stand der Füllung im Doppelmantelgefäß auf gleichem Niveau bleibt. Aus (9) rieselt das Produkt trocken in die Vorlage (10), die ebenfalls einen Mantel für Wasserkühlung besitzt, wobei mit ausgetragenes Chlor zu einer Grünfärbung des Gasraumes in (10) führt. Durch Zellenradschleuse (11) wird Produkt entfernt.

Durch Leitung (12) wird langsam Stickstoff in die Vorlage (10) eingedrückt, der (10) über Leitung (13) wieder verläßt. Leitung (13) mündet in die Leitung (6) für Chlor ein. Der nicht reagierende Stickstoff verläßt das System über den Rückflußkühler (5), während Chlor in (7) vollständig reagiert. An der gekühlten Mantelflächen von (1) ist eine geringe Kondensation von Phosphortrichlorid zu beobachten. Während die Oberfläche des Kristallbreis (7) im Gefäß (1) etwas feucht ist, ist das Produkt in der Nähe des Chloreinleitungsrohres (6) und des Produktaustrags (8) vollkommen trocken.

Während der Zugabe von Phosphortrichlorid und Chlor werden 335,9 g (1,613 Mol) Phosphorpentachlorid in die Vorlage (10) ausgetragen. Zur Beendigung der Reaktion werden 9 g (0,127 Mol) Chlor durch Leitung (6) in das Gemisch (7) eingeleitet. Das Produkt wird über (8) und (9) nach (10) überführt.

Man erhält insgesamt 800 g (3,84 Mol) rieselfähiges, kristallines weißes bis hellgelbes Phosphorpentachlorid, das durch die Spülung mit Stickstoff von Chlor befreit wird. Das Produkt enthält weniger als 0,1% Phosphortrichlorid und verbackt nicht.

### Beispiel 3

Die Versuchsapparatur entspricht der von Beipiel 2.

Das Doppelmantelgefäß wird mit 450 g (2,16 Mol) Phosphorpentachlorid und 23,6 g (0,172 Mol Phosphortrichlorid gefüllt. Innerhalb von 16 Minuten werden 212,5 g (1,547 Mol) Phosphortrichlorid über Leitung (4) zugetropft und gleichzeitig 109,7 g (1,547 Mol) Chlor durch Leitung (6) in das Gemisch (7) aus $PCl_5/PCl_3$ eingeleitet. Die Reaktionstemperatur steigt bis auf 126°C an. Während der Reaktion wird kein Produkt ausgetragen, und der Füllstand im Reaktionsgefäß steigt mit der Zugabe von $PCl_3$ und $Cl_2$ an. Zur Beendigung der Reaktion werden 24,4 g (0,344 Mol) Chlor eingeleitet und anschließend das Phosphorpentachlorid mit der Schnekke (9) in die Vorlage (10) ausgetragen. Man erhält 798 g (3,83 Mol) Phosphorpentachlorid.

### Beispiel 4

In einem 1-l-Vierhalskolben mit mechanischer Rührung, Rückflußkühler, Thermometer und Gaseinleitung, der mit externer Heizung und einem Bodenablaß versehen ist, werden 450 g $PCl_3$ vorgelegt. Das Phosphortrichlorid wird auf 60°C erwärmt und anschließend werden innerhalb 30 Minuten 69,1 g Chlor eingeleitet. Die Tempertur beträgt 62—83°C. Die Lösung ist bei Beendigung der Chloreinleitung durch Ausfällen von $PCl_5$ leicht trübe.

Über eine erwärmte Leitung wird die Hälfte der Reaktionsmischung in ein zweites Reaktionsgefäß geführt, welches mit mechanischer Rührung, Destillationsbrücke, Thermometer und Gaseinleitung versehen ist. Das Gefäß ist auf 100°C vorgeheizt. Es werden 138 g Chlor/h eingeleitet, bis die Reaktionsmischung ein fester Kristallbrei ist. Anschließend werden gleichzeitig Chlor eingeleitet und $PCl_5/PCl_3$-Lösung zudosiert. Schließlich wird die Reaktion durch Zugabe von Chlor im Überschuß beendet. Die Temperatur im Kolben steigt bis auf 120°C an. Es werden 231 g $PCl_3$ abdestilliert. Man erhält 330 g Phosphorpentachlorid.

### Patentansprüche

1. Verfahren zur Herstellung von Phosphorpentachlorid hoher Reinheit in Form eines rieselfähigen Kristallpulvers durch Umsetzung von Phosphortrichlorid mit Chlor, dadurch gekennzeichnet, daß man die Umsetzung in zwei Stufen vornimmt, wobei man in der ersten Stufe unter Rühren bei einer Temperatur von 0 bis 150°C Phosphortrichlorid mit der 0,1 bis 0,999fachen molaren Menge Chlor vereinigt, eine 0 bis 0,9fache Menge des zugegebenen Phosphortrichlorids abdestilliert und dabei zu einem aus 50—99,9 Mol-% Phosphorpentachlorid bestehenden $PCl_3/PCl_5$-Kristallbrei umsetzt und diesen in der zweiten Stufe bei 0 bis 150°C mit einem Überschuß an Chlor zu Phosphorpentachlorid reagieren läßt.

2. Verfahren nach Anspruch 1, dadurch gekennzeichnet, daß die Reaktionstemperatur in der ersten Stufe bei 75 bis 140°C und in der zweiten Stufe bei 70 bis 150°C gehalten wird.

3. Verfahren nach Anspruch 1, dadurch gekennzeichnet, daß das Phosphortrichlorid in Form einer breiförmigen Mischung mit Phosphorpentachlorid eingesetzt wird.

4. Verfahren nach Anspruch 1, dadurch gekennzeichnet, daß das Gemisch der ersten Stufe in ein zweites Reaktionsgefäß überführt wird, in dem die Umsetzung mit überschüssigem Chlor stattfindet.

5. Verfahren nach Anspruch 1, dadurch gekennzeichnet, daß man zum Gemisch der ersten Stufe Phosphortrichlorid und Chlor so zugibt, daß für jedes Intervall von 60 Minuten das Molverhältnis von zugegebenen $PCl_3$ : Chlor 1 : 0,1 bis 1 : 2 beträgt.

6. Verfahren nach Anspruch 3, dadurch gekennzeichnet, Phosphortrichlorid und Chlor kontinuierlich und gleichzeitig zugegeben werden.

7. Verfahren nach Anspruch 1, dadurch gekennzeichnet, daß im zweiten Reaktionsgefäß bereits während des Überführens des Gemisches eine Chloratmosphäre vorhanden ist.

8. Verfahren nach Anspruch 4 oder 7, dadurch gekennzeichnet, daß das Reaktionsgefäß für die zweite Stufe ein Austragungsorgan für das Gemisch ist.

9. Verfahren nach Anspruch 8, dadurch gekennzeichnet, daß das Austragungsorgan, in dem die zweite Stufe durchgeführt wird, eine Austrag-Schnecke ist.

10. Kontinuierliches Verfahren zur Herstellung von Phosphorpentachlorid hoher Reinheit in Form eines rieselfähigen Kristallpulvers durch Umsetzung von Phosphortrichlorid mit Chlor, dadurch gekennzeichnet, daß man in einem gerührten Reaktionsbehälter ein Gemisch aus Phosphorpentachlorid und Phosportrichlorid vorlegt, in das man Phosphortrichlorid einleitet oder auf dessen Oberfläche man Phosphortrichlorid aufgibt, von dem die 0 bis 0,9fache Menge abdestilliert wird, man eine, bezogen auf den nicht abdestillierten, kontinuierlich zugegebenen Anteil an $PCl_3$, 0,98 molare bis äquimolare Menge Chlor in das Gemisch einleitet, wobei das Gemisch im Temperaturbereich von 0 bis 150°C gehalten wird, man das Reaktionsprodukt in der Nähe der Stelle der Chloreinleitung abzieht und man die im abgezogenen Reaktionsprodukt enthaltene Menge Chlor zusätzlich in das Gemisch einleitet.

11. Verfahren nach Anspruch 10, dadurch gekennzeichnet, daß das vorgelegte Gemisch aus Phosphortrichlorid und Phosphorpentachlorid ein Molverhältnis $PCl_5$ : $PCl_3$ von 1 : 1 bis 999 : 1 aufweist.

12. Verfahren nach Anspruch 11, dadurch gekennzeichnet, daß der Reaktionsbehälter langgestreckt ist und Chlor und Phosphortrichlorid an den entgegengesetzten Enden des Reaktionsbehälters eingeführt werden.

13. Verfahren nach Anspruch 12, dadurch gekennzeichnet, daß ein rohrförmiger Reaktionsbehälter verwendet wird, der senkrecht angeordnet ist und das Chlor am unteren Ende des Reaktionsbehälters eingeleitet wird.

14. Verfahren nach Anspruch 1, dadurch gekennzeichnet, daß man in einem gerührten Reaktionsbehälter $PCl_5$, oder ein Gemisch aus $PCl_5$ und $PCl_3$ im Molverhältnis von 1 : 1 oder mehr, vorlegt, man in das $PCl_5$ bzw. das Gemisch Phosphortrichlorid einleitet oder man auf die Oberfläche des $PCl_5$, bzw. des Gemisches, flüssiges $PCl_3$ aufgibt und man pro Mol $PCl_3$ bis 0,999 Mol Chlor in das Gemisch einleitet, eine 0 bis 0,9fache Menge des zugegebenen Phosphortrichlorids abdestilliert mit der Maßgabe, daß während der Reaktion ein Molverhältnis $PCl_5$ : $PCl_3$ im Reaktionsbehälter von mindestens 1 : 1 und eine Reaktionstemperatur von 0 bis 150° C eingehalten werden und man bei Erreichen eines vorgegebenen Füllstandes des Reaktionsbehälters die Zugabe von $PCl_3$ beendet und eine überschüssige Menge Chlor in das Reaktionsgemisch einleitet.

## Claims

1. A process for the preparation of highly pure phosphorus pentachloride in the form of a free-flowing crystalline powder by reaction of phosphorus trichloride with chlorine, which comprises carrying out the reaction in two stages, phosphorus trichloride being combined with 0.1 to 0.999 times the molar amount of chlorine in the first stage at a temperature of 0 to 150° C, while stirring, 0 to 0.9 times the amount of the phosphorus trichloride added being distilled off and the remainder thereby being converted into a $PCl_3/PCl_5$ crystal sludge comprising 50—99.9 mole % of phosphorus pentachloride, and this sludge being reacted with an excess of chlorine in the second stage at 0 to 150° C to give phosphorus pentachloride.

2. A process as claimed in claim 1, wherein the reaction temperature in the first stage is kept at 75 to 140° C and the reaction temperature in the second stage is kept at 70 to 150° C.

3. A process as claimed in claim 1, wherein the phosphorus trichloride is employed in the form of a mixture with phosphorus pentachloride.

4. A process as claimed in claim 1, wherein the sludge from the first stage is transferred to a second reaction vessel, in which the reaction with excess chlorine takes place.

5. A process as claimed in claim 1, wherein phosphorus trichloride and chlorine are added during the first stage in a manner such that, for each interval of 60 minutes, the molar ration of added $PCl_3$ : chlorine is 1 : 0.1 to 1 : 2.

6. A process as claimed in claim 3, wherein the phosphorus trichloride and chlorine are added continuously and simultaneously.

7. A process as claimed in claim 1, wherein a chlorine atmosphere is already present in the second reaction vessel during transfer of the sludge.

8. A process as claimed in either of claims 4 or 7, wherein the reaction vessel for the second stage is a discharing device for the mixture.

9. A process as claimed in claim 8, wherein the discharing device in which the second stage is carried out is a discharge screw.

10. A continuous process for the preparation of highly pure phosphorus pentachloride in the form of a free-flowing crystalline powder by reaction of phosphorus trichloride with chlorine, which comprises initially introducing a mixture of phosphorus pentachloride and phosphorus trichloride into a stirred reaction container, introducing phosphorus trichloride into the mixture or onto the surface of this mixture and distilling off 0 to 0.9 times this amount of phosphorus trichloride, passing 0.98 to 1.0 mole of chlorine per mole of the continously added amount of $PCl_3$ which has not been distilled off, into the mixture, the mixture being kept in the temperature range from 0 to 150° C, removing the reaction product close to the point at which chlorine is introduced and additionally passing into the mixture the amount of chlorine contained in the reaction product removed.

11. A process as claimed in claim 10, wherein the initially introduced mixture of phosphorus trichloride and phosphorus pentachloride has a molar ration of $PCl_5$ : $PCl_3$ of 1 : 1 to 999 : 1.

12. A process as claimed in claim 11, wherein the reaction container is elongated and the chlorine and phosphorus trichloride are introduced at opposite ends of the reaction container.

13. A process as claimed in claim 12, wherein a tube-shaped reaction container which is arranged vertically is used, and the chlorine is introduced at the bottom of the reaction container.

14. A process as claimed in claim 1, which comprises initially introducing $PCl_5$ or a mixture of $PCl_5$ and $PCl_3$ in a molar ration of 1 : 1 or more into a stirred reaction container, introducing liquid $PCl_3$ onto or below the surface of the $PCl_5$ or of the mixture, passing 0.1 to 0.999 mole of chlorine per mole of $PCl_3$ into the mixture, distilling off 0 to 0.9 times the amount of phosphorus trichloride added, with the proviso that a molar ratio of $PCl_5$ : $PCl_3$ of at least 1 : 1 is maintained in the reaction container during the reaction, and a reaction temperature of 0 to 150° C is maintained, and, when the level to which the reaction container is filled has reached a given height, ending the addition of $PCl_3$ and passing an excess amount of chlorine into the reaction mixture.

## Revendications

1. Procédé pour préparer un pentachlorure de phosphore de grande pureté sous la forme d'une poudre cristalline fluente, par réaction du trichlorure de phosphore avec le chlore, procédé caractérisé en ce qu'on effectue la réaction en deux étapes, à savoir: dans la première étape effectuée sous agitation, à une température de 0 à 150°C, on réunit le trichlorure de phosphore avec une quantité de chlore représentant de 0,1 à 0,999 fois la quantité molaire, on chasse par distillation une quantité du trichlorure de phosphore ajouté représentant de 0 à 90% de la quantité ajoutée et on fait alors réagir jusqu'à obtention d'une bouillie cristalline de $PCl_3$ et $PCl_5$ constituée de 50 à 99,9% en moles de pentachlorure de phosphore, et, dans la seconde étape, on fait réagir cette bouillie, à une température de 0 à 150°C, avec un excès de chlore de manière à obtenir le pentachlorure de phosphore.

2. Procédé selon la revendication 1 caractérisé en ce que la température réactionelle est maintenue entre 75 et 140°C dans la première étape et entre 70 et 175°C dans la seconde.

3. Procédé selon la revendication 1 caractérisé en ce que le trichlorure de phosphore est mis en jeu sous la forme d'un mélange avec du pentachlorure de phosphore se présentant sous la forme d'une bouillie.

4. Procédé selon la revendication 1 caractérisé en ce que le mélange de la première étape est transvasé dans un second récipient réactionnel où a lieu la réaction avec l'excès de chlore.

5. Procédé selon la revendication 1 caractérisé en ce qu'on ajoute, au mélange réactionnel de la première étape, du trichlorure de phosphore et du chlore de telle façon que, pour chaque intervalle de temps de 60 minutes, le rapport molaire du $PCl_3$ ajouté au chlore ajouté soit compris entre 1 : 0,1 et 1 : 2.

6. Procédé selon la revendication 3 caractérisé en ce que le trichlorure de phosphore et le chlore sont ajoutés continuellement et simultanément.

7. Procédé selon la revendication 1 caractérisé en ce que l'atmosphère du second récipient réactionnel est une atmosphère de chlore déjà au cours dû transvasement du mélange.

8. Procédé selon l'une des revendications 4 et 7, caractérisé en ce que le récipient réactionnel pour la seconde étape est un organe de décharge pour le mélange.

9. Procédé selon la revendication 8 caractérisé en ce que l'organe de décharge dans lequel la seconde étape est effectuée est une vis de décharge.

10. Procédé continu pour préparer un pentachlorure de phosphore de grande pureté sous la forme d'une poudre cristalline fluente, par réaction du trichlorure de phosphore avec le chlore, procédé caractérisé en ce qu'on place, dans un récipient réactionnel agité, un mélange constitué de pentachlorure de phosphore et de trichlorure de phosphore dans lequel on introduit du trichlorure de phosphore ou à la surface duquel on fait arriver du trichlorure de phosphore, dont in chasse de 0 à 90% par distillation, on introduit dans le mélange une quantité de chlore 0,98 molaire à équimolaire par rapport à la quantité de $PCl_3$ qui est ajoutée en continu et qui n'est pas chassée par distillation, cela tout en maintenant le mélange à une température comprise entre 0 et 150°C, on soutire le produit réactionnel au voisinage de l'endroit par où l'on fait arriver le chlore et l'on introduit en outre dans le mélange la quantité de chlore contenue dans le produit réactionnel soutiré.

11. Procédé selon la revendication 10 caractérisé en ce que le mélange de trichlorure de phosphore et de pentachlorure de phosphore qui a été préalablement mis en place présente un rapport molaire $PCl_5$ : $PCl_3$ compris entre 1 : 1 et 999 : 1.

12. Procédé selon la revendication 1 caractérisé en ce que le récipient réactionnel a une grande longueur et en ce que le chlore et le trichlorure de phosphore sont introduit aux extrémités opposées du récipient réactionnel.

13. Procédé selon la revendication 12 caractérisé en ce qu'on utilise un récipient réactionnel tubulaire placé verticalement et en ce qu'on introduit le chlore à l'extrémité inférieure du récipient réactionnel.

14. Procédé selon la revendication 1 caractérisé en ce qu'on place d'abord, dans un récipient réactionnel agité, $PCl_5$, ou un mélange de $PCl_5$ et de $PCl_3$ dans un rapport molaire d'au moins 1 : 1, on introduit du trichlorure de phosphore dans le $PCl_5$ ou dans le mélange, ou encore on fait arriver du $PCl_3$ liquide à la surface du $PCl_5$ ou du mélange, et on introduit dans le mélange de 0,1 à 0,999 mole de chlore par mole de $PCl_3$, on chasse par distillation de 0 à 0,9 fois la quantité du trichlorure de phosphore ajouté en veillant toutefois à ce que le rapport molaire $PCl_5$ : $PCl_3$ dans le récipient réactionnel soit d'au moins 1 : 1 au cours de la réaction et à ce qu'une température réactionnelle de 0 à 150°C soit maintenue, on arrête l'addition de $PCl_3$ dès que le taux de remplissage du récipient réactionnel a atteint une valeur donnée et on introduit un excès de chlore dans le mélange réactionnel.